# EUROPEAN PATENT APPLICATION

(11) **EP 4 793 838 A1**
(43) Date of publication of application: **19.08.2026**
(21) Application number: 26155669.0
(22) Date of filing: 02.02.2026
(51) Int. Cl.: G06N 10/40

(54) **QUBIT ISLAND WITH TOPOLOGICAL SUPERCONDUCTING WIRES AND TRIVIAL SUPERCONDUCTING WIRE**

(30) Priority: 14.02.2025 US 202563758959 P; 22.04.2025 US 202519186080
(71) Applicant: Microsoft Technology Licensing, LLC, Redmond, WA 98052-6399 (US)
(72) Inventor: BOUTIN, Samuel, Redmond, 98052-6399 (US); BAUER, Roman Bela, Redmond, 98052-6399 (US)
(74) Representative: Page White Farrer

(57) **Abstract**

A qubit island including a plurality of topological superconducting wires, a trivial superconducting wire that couples the topological superconducting wires, and one or more electrostatic gates located above the topological superconducting wires and the trivial superconducting wire in a thickness direction. The plurality of topological superconducting wires each have respective topological wire widths that are greater than a trivial wire width of the trivial superconducting wire. The one or more electrostatic gates are operated at a gate voltage that places the topological superconducting wires into a single sub-band regime and places the trivial superconducting wire into a depleted regime.

## Description

### BACKGROUND

Majorana-based quantum computing is one approach to quantum computing that has been developed in order to decrease error probabilities. In Majorana-based quantum computing, qubits are formed using Majorana zero modes (MZMs) that are instantiated at superconducting regions of a quantum computing device. Topological parities of the MZMs are used to store qubits and classical bits that are used in quantum computations. The quantum states of the MZMs may be topologically protected, which makes those quantum states more error resistant.

In a Majorana-based quantum computing device, the MZMs are instantiated at the endpoints of topological superconducting wires. When two or more MZMs are formed at a superconducting region, that superconducting region is known as a Majorana island. To perform quantum computations at the Majorana islands, MZMs may be connected to form measurement loops. At these measurement loops, the joint parities of the MZMs may be measured. Logic gates may be constructed from these joint parity measurements. Thus, the MZMs form the physical qubits of the quantum computing device.

### SUMMARY

According to one aspect of the present disclosure, a qubit island is provided, including a plurality of topological superconducting wires, a trivial superconducting wire that couples the topological superconducting wires, and one or more electrostatic gates located above the topological superconducting wires and the trivial superconducting wire in a thickness direction. The plurality of topological superconducting wires each have respective topological wire widths that are greater than a trivial wire width of the trivial superconducting wire. The one or more electrostatic gates are operated at a gate voltage that places the topological superconducting wires into a single sub-band regime and places the trivial superconducting wire into a depleted regime.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1A schematically shows an example qubit island including topological superconducting wires and a trivial superconducting wire, according to one example embodiment.
FIG. 1B shows a zoomed-in view of a topological-trivial superconductor junction at which a topological superconducting wire meets the trivial superconducting wire, according to the example of FIG. 1A.
FIG. 2 schematically shows a cross-sectional view of a portion of the qubit island 10 that includes a superconducting wire, according to the example of FIG. 1A.
FIG. 3A shows a plot of the depletion voltage of a topological superconducting wire, according to the example of FIG. 1A.
FIG. 3B shows a plot of the depletion voltage difference between a topological superconducting wire and a trivial superconducting wire, according to the example of FIG. 1A.
FIG. 4 schematically shows a quantum computing system including a qubit array and a controller, according to the example of FIG. 1A.
FIG. 5 shows a flowchart of a method for use with a quantum computing system, according to the example of FIG. 4.
FIG. 6A schematically shows an example configuration of the quantum computing system of FIG. 4.
FIG. 6B shows a schematic view of an example computing environment in which the quantum computing system of FIG. 4 may be instantiated.

### DETAILED DESCRIPTION

In existing Majorana-based topological qubit configurations, a qubit island is formed using two or more topological superconducting wire segments. Those topological superconducting wires are linked by a topologically trivial superconducting wire segment that acts as a backbone of the qubit island. In order to engineer either a topological or trivial superconducting phase in the two or more topological superconducting wires and the trivial superconducting wire, respective voltages are applied to the electrostatic gates in proximity to the superconducting wires.

Topological superconductivity and trivial superconductivity occur at different voltages in existing Majorana-based qubit devices. This voltage difference between superconductivity regimes may present difficulties in Majorana-based qubit device development and construction, since the qubit island includes junctions between the topological superconducting wires and the trivial superconducting backbone. At such a junction, the electrostatic gate applies the same voltage to both the topological superconducting wire and the trivial superconducting wire even though the different types of superconducting wires have different voltage ranges in which they exhibit the desired types of superconductivity. Accordingly, in conventional topological qubit devices, it is difficult to concurrently tune the topological superconducting wires to a topological superconducting regime and tune the trivial superconducting wire to the trivial superconducting regime.

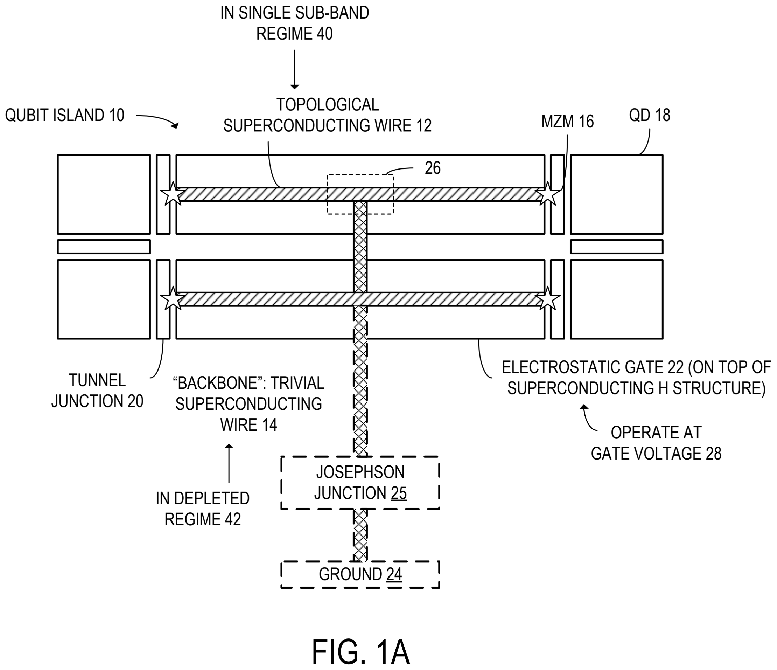

In order to address the above challenges, a qubit island 10 is provided, as shown in the example of FIG. 1A. The qubit island 10 includes a plurality of topological superconducting wires 12 and a trivial superconducting wire 14 that couples the topological superconducting wires 12. The qubit island 10 includes two topological superconducting wires 12 in the example of FIG. 1A. In this example, the endpoints of the trivial superconducting wire 14 are located proximate to the midpoints of the topological superconducting wires 12, such that the trivial superconducting wire 14 forms the backbone of an "H" structure.

The qubit island 10 further includes quantum dots (QDs) 18 that are coupled to the endpoints of the topological superconducting wires 12 by respective tunnel junctions 20. In addition, the qubit island 10 includes tunnel junctions 20 between the QDs 18 that are located proximate to each other. The tunnel junctions 20 may be opened and closed to control the electrical connectivity between different portions of the qubit island 10. The qubit island 10 may also be coupled to one or more other qubit islands 10 via tunnel junctions 20 in a quantum computing device that includes a plurality of qubit islands 10.

In some examples, as shown in FIG. 1A, the trivial superconducting wire 14 is coupled to a ground 24. Coupling the trivial superconducting wire 14 to the ground 24 may allow electrical characterization measurements of the topological superconductors to be performed more easily. Additional coupling to the ground 24 through a Josephson junction 25 or a tunnel junction 20 may allow intercomponent electron poisoning (ICEP) errors to be detected and mitigated more easily.

The qubit island 10 further includes one or more electrostatic gates 22 located above the topological superconducting wires 12 and the trivial superconducting wire 14 in a thickness direction. In the example of FIG. 1A, the qubit island 10 includes two electrostatic gates 22 that are located above corresponding topological superconducting wires 12 in the thickness direction. In other examples, the qubit island 10 may instead include a single electrostatic gate 22 located above the topological superconducting wires 12.

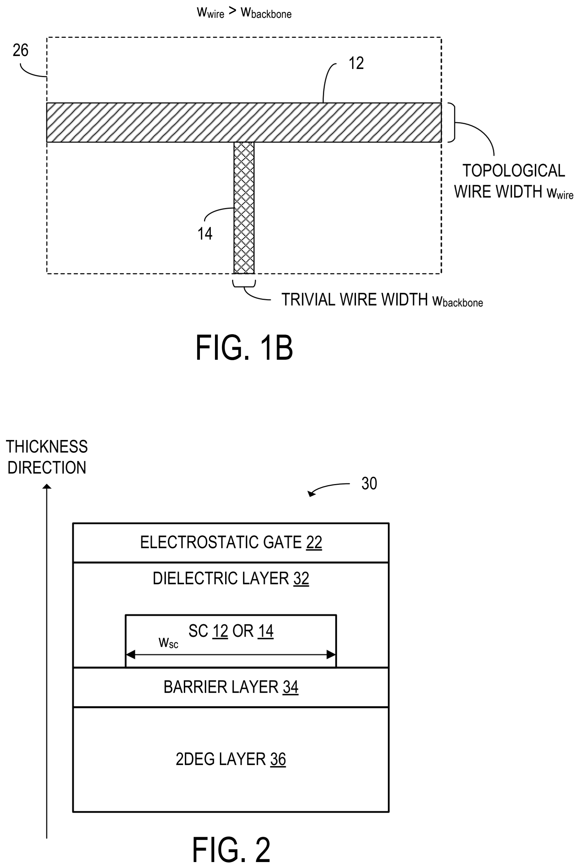

FIG. 1B shows a zoomed-in view of a topological-trivial superconductor junction 26 at which a topological superconducting wire 12 meets the trivial superconducting wire 14. As shown in FIGS. 1A-1B, the plurality of topological superconducting wires 12 each have respective topological wire widths w_{wire} that are greater than a trivial wire width w_{backbone} of the trivial superconducting wire 14. "Width" refers here to the minor dimension of a wire in the plane that lies perpendicular to the thickness direction.

The voltage ranges at which trivial superconductivity and topological superconductivity occur depend on wire width. Accordingly, the difference in widths between the topological superconducting wires 12 and the trivial superconducting wire 14 allows the same voltage to induce both trivial superconductivity in the trivial superconducting wire 14 and induce topological superconductivity in the topological superconducting wires 12.

FIG. 2 schematically shows a cross-sectional view 30 of a portion of the qubit island 10 that includes a superconducting wire. The superconducting wire shown in FIG. 2 may be either a topological superconducting wire 12 or the trivial superconducting wire 14. This wire has a width w_{sc} in the example of FIG. 2.

In the thickness direction, progressing from top to bottom, the portion of the qubit island 10 shown in FIG. 2 includes the one or more electrostatic gates 22 as an upper layer. A single electrostatic gate 22 is shown in the example of FIG. 2. The qubit island 10 further includes a dielectric layer 32 located below the one or more electrostatic gates 22 in the thickness direction. The qubit island 10 further includes a barrier layer 34 located below the dielectric layer 32 in the thickness direction. The topological superconducting wires 12 and the trivial superconducting wire 14 are positioned at an interface between the dielectric layer 32 and the barrier layer 34.

The qubit island 10 further includes a two-dimensional electron gas (2DEG) layer 36 located below the barrier layer 34 in the thickness direction. The 2DEG layer 36 is a semiconductor heterostructure that forms a shallow 2DEG with strong spin-orbit coupling. In some examples, the 2DEG layer 36 is formed as a stack of a plurality of sub-layers with different compositions.

By depositing a superconductor strip on top of the 2DEG layer 36 and covering that superconductor strip with an electrostatic gate 22, a topological phase of matter exhibiting MZMs may be obtained. These MZMs 16 are instantiated at respective endpoints of the topological superconducting wires 12, as shown in FIG. 1A. In the example of FIG. 1A, the qubit island 10 is a tetron island at which four MZMs 16 are instantiated. In other examples, the qubit island may be a hexon island at which six MZMs 16 are instantiated.

In the example of FIG. 1A, the qubit island 10 has a two-sided architecture in which the trivial superconducting wire 14 intersects the topological superconducting wires 12 proximate to respective midpoints of those topological superconducting wires 12, and in which the MZMs 16 are located at lefthand and righthand ends of the topological superconducting wires 12 relative to the trivial superconducting wire 14. In other examples, the qubit island 10 may have a one-sided architecture in which the trivial superconducting wire 14 intersects a plurality of topological superconducting wires 12 at respective endpoints of those topological superconducting wires 12. In the one-sided architecture, the MZMs 16 are instantiated at the opposite ends of the topological superconducting wires 12 from their intersection points with the trivial superconducting wire 14.

In order to form the MZMs 16 at the endpoints of the topological superconducting wires 12, a magnetic field is applied parallel to the topological superconducting wires 12. In addition, a negative voltage is applied to the one or more electrostatic gates 22 overlying the topological superconducting wires 12. This negative voltage depletes electrons in the 2DEG layer 36 proximate to the topological superconducting wires 12 while leaving a single partial occupied electronic band below the topological superconducting wires 12, thereby placing the topological superconducting wires 12 into a single sub-band regime 40. The single sub-band regime 40 allows the MZMs 16 to form at the wire endpoints. For a given set of materials and a given superconducting wire width, only regions of the parameter space defined by the applied voltage and magnetic field will lead to a topological phase.

The one or more electrostatic gates 22 are operated at a gate voltage 28 that places the topological superconducting wires 12 into the single sub-band regime 40 and also places the trivial superconducting wire 14 into a depleted regime 42. The depleted regime 42 is a region of the parameter space in which the trivial superconducting wire 14 exhibits topologically trivial superconductivity. As discussed above, the respective widths of the topological superconducting wires 12 and the trivial superconducting wire 14 are selected such that the same value of the gate voltage 28 induces both the single sub-band regime 40 in the topological superconducting wires 12 and the depleted regime 42 in the trivial superconducting wire 14.

In some examples, rather than the single sub-band regime 40, the topological superconducting wires 12 may be operated in a few sub-band regime in which the topological superconducting wires 12 exhibit a small number of sub-bands other than one. For example, the topological superconducting wires 12 may be operated in a two-sub-band or three-sub-band regime, although the single sub-band regime 40 typically results in higher qubit reliability.

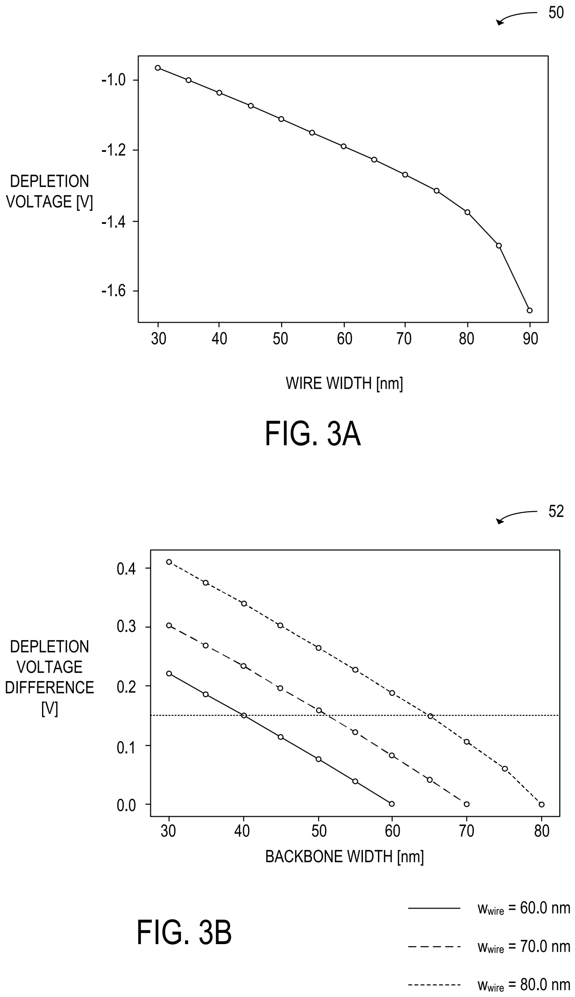

FIG. 3A shows a plot 50 of the depletion voltage of a topological superconducting wire 12, according to an example computer simulation. The depletion voltage is the voltage at which the topological superconducting wire 12 transitions from the single sub-band regime to the depleted regime. The topological superconducting wire 12 has a topological wire width between 30 nm and 90 nm in the example of FIG. 3A. As the width of the topological superconducting wire 12 increases, the depletion voltage monotonically decreases.

FIG. 3B shows a plot 52 of the depletion voltage difference between a topological superconducting wire 12 and a trivial superconducting wire 14, according to an example computer simulation. The depletion voltage difference is the difference between the topological wire depletion voltage of the topological superconducting wire 12 and the trivial wire depletion voltage of the trivial superconducting wire 14. In the plot 52, the depletion voltage difference is shown as a function of the trivial wire width w_{backbone}. The trivial superconducting wire 14 has a trivial wire width w_{backbone} between 30 nm and 80 nm in the example of FIG. 3B. Respective depletion voltage difference curves are shown for three different widths of the topological superconducting wire 12: w_{wire} = 60.0 nm, w_{wire} = 70.0 nm, and w_{wire} = 80.0 nm. For each value of the trivial wire width that is narrower than the topological wire width, the depletion voltage difference is between 0.04V and 0.4V.

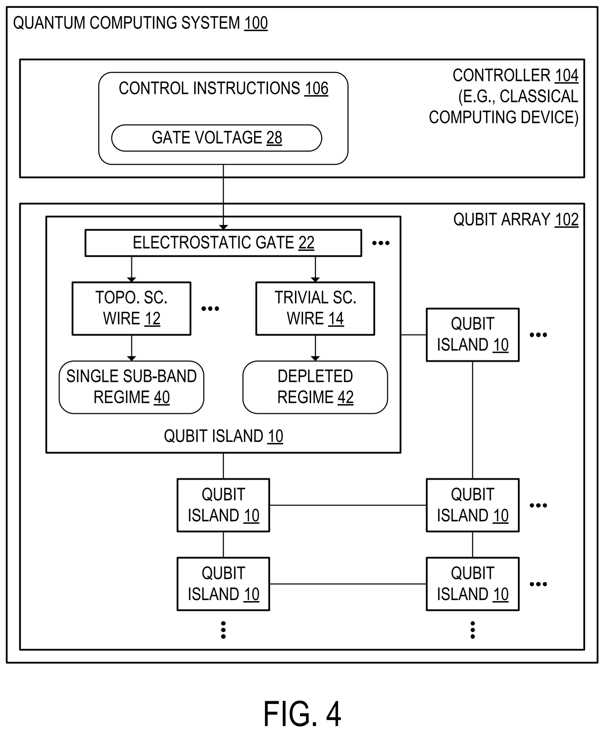

As discussed above, by using narrower wires for the trivial superconducting segments and wider wires for the topological segments, an electrostatic gate 22 can be used to tune both wire segments to their target superconducting phases. FIG. 4 schematically shows a quantum computing system 100 at which electrostatic gates 22 are used to control the superconducting phases of the wires. The quantum computing system 100 shown in FIG. 4 includes a plurality of qubit islands 10 arranged in a qubit array 102. In this example, the qubit array 102 is a rectangular grid of qubit islands 10.

As in the example of FIG. 1A, each of the qubit islands 10 includes a plurality of topological superconducting wires 12 and a trivial superconducting wire 14 that couples the topological superconducting wires 12. Each of the qubit islands 10 further includes one or more electrostatic gates 22 located above the topological superconducting wires 12 and the trivial superconducting wire 14 in the thickness direction. The plurality of topological superconducting wires 12 each have respective topological wire widths w_{wire} that are greater than a trivial wire width w_{backbone} of the trivial superconducting wire 14. In some examples, the qubit island 10 includes a plurality of electrostatic gates 22 that are located above corresponding topological superconducting wires 12 in the thickness direction. In other examples, the qubit island 10 includes a single electrostatic gate 22 located above the topological superconducting wires 12.

The quantum computing system 100 further includes a controller 104 configured to operate the one or more electrostatic gates 22 in each of the qubit islands 10. For example, the controller 104 may include a classical computing device. The controller 104 is configured to transmit, to the qubit array 102, control instructions 106 that set a gate voltage 28 for the one or more electrostatic gates 22. This gate voltage 28 places the topological superconducting wires 12 into the single sub-band regime 40 and places the trivial superconducting wire 14 into the depleted regime 42. In other examples, the gate voltage 28 may place the topological superconducting wires 12 into a few sub-band regime, such as a two-sub-band regime or a three-sub-band regime. The controller 104 is therefore configured to operate the qubit islands 10 such that respective MZMs 16 are instantiated at respective endpoints of the topological superconducting wires 12.

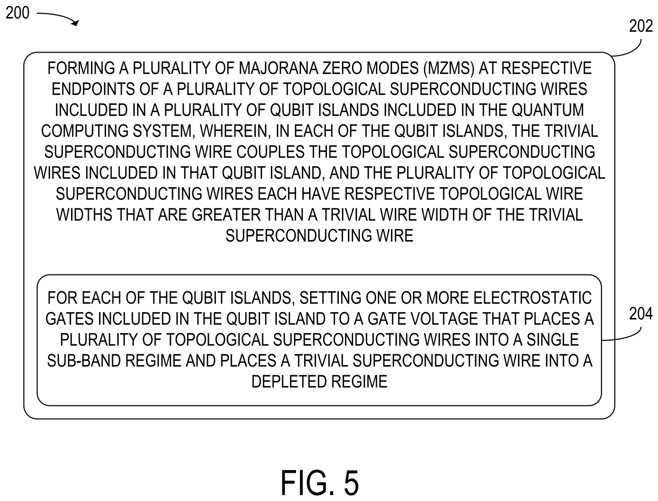

FIG. 5 shows a flowchart of a method 200 for use with a quantum computing system. For example, the method of FIG. 5 may be used with the quantum computing system 100 of FIG. 4. At step 202, the method 200 includes forming a plurality of MZMs at respective endpoints of a plurality of topological superconducting wires. The topological superconducting wires are included in a plurality of qubit islands, which in turn are included in the quantum computing system at a qubit array. In each of the qubit islands, a trivial superconducting wire couples the topological superconducting wires included in that qubit island.

Step 202 includes step 204, which is performed for each of the qubit islands in order to form the MZMs at the endpoints of the topological superconducting wires. Step 204 includes setting one or more electrostatic gates included in the qubit island to a gate voltage that places a plurality of topological superconducting wires into a single sub-band regime and places a trivial superconducting wire into a depleted regime. Alternatively, the topological superconducting wires may be placed into a few sub-band regime. Accordingly, the same gate voltage induces trivial superconductivity in the trivial superconducting wire and topological superconductivity in the topological superconducting wires. The plurality of topological superconducting wires each have respective topological wire widths that are greater than a trivial wire width of the trivial superconducting wire, and this difference in wire widths allows a single gate voltage to be used to place the topological superconducting wires into the single sub-band regime and place the trivial superconducting wire into the depleted regime.

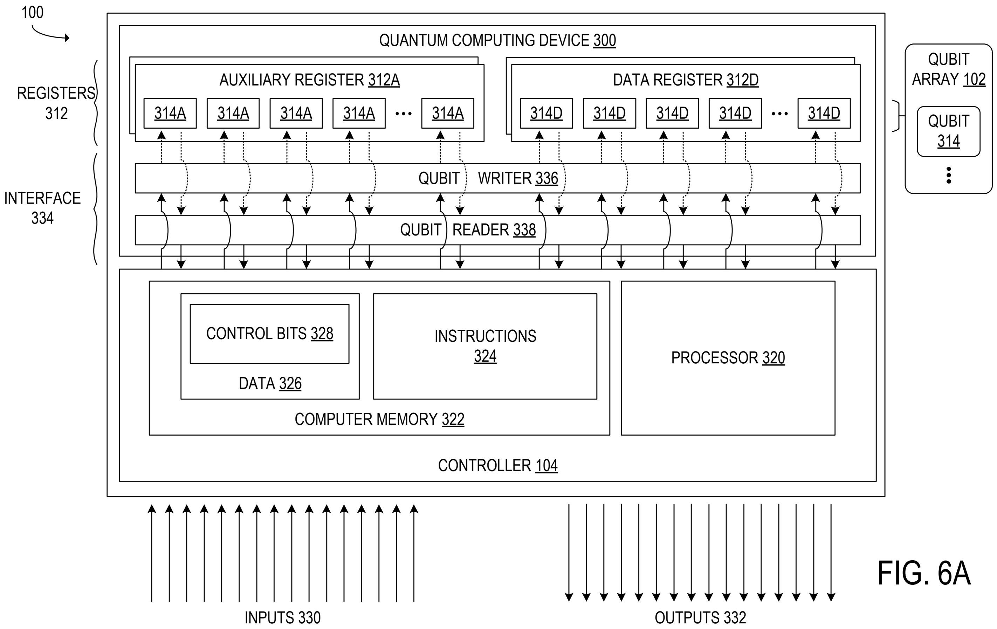

FIG. 6A schematically shows an example configuration of the quantum computing system 100 of FIG. 4. The quantum computing system of FIG. 6A includes a quantum computing device 300 and a classical computing device 318. The quantum computing device 300 is configured to execute quantum-logic operations. Whereas conventional computer memory holds data in an array of bits and enacts bit-wise logic operations, the quantum computing device 300 holds data in a qubit array 102 and operates quantum-mechanically on a plurality of qubits 314 in order to implement the desired logic. Accordingly, the quantum computing device 300 of FIG. 6A includes a set of qubit registers 312-e.g., data register 312D and auxiliary register 312A. Each qubit register includes a series of qubits 314, with the data register 312D including a plurality of data qubits 314D and the auxiliary register 312A including a plurality of auxiliary qubits 314A. The number of qubits 314 in a qubit register is not particularly limited but may be determined based on the complexity of the quantum logic to be enacted by the quantum computing device 300. The qubits 314 shown in FIG. 6A are Majorana-based topological qubits.

The quantum computing system 100 includes a classical computing device configured as the controller 104 of the quantum computing device 300. The controller 104 may include at least one processor 320 and associated computer memory 322. The processor 320 may be coupled operatively to peripheral componentry, such as network componentry, to enable the quantum computing device 300 to be operated remotely. The processor 320 may include a central processing unit (CPU), a graphics processing unit (GPU), and/or other types of processing devices. Multiple physical processing devices may be included in the processor 320.

The computer memory 322 may be configured to hold instructions 324 that cause the processor 320 to execute any function or process of the controller 104. The computer memory 322 may also be configured to hold additional data 326. In some examples, data 326 may include a register of classical control bits 328 that influence the operation of the quantum computing device 300 during runtime, e.g., to provide classical control input to one or more quantum-gate operations. The controller 104 may include control componentry operable at low or cryogenic temperatures, e.g., a field-programmable gate array (FPGA) operated at 77K. In such examples, the low-temperature control componentry may be coupled operatively to interface componentry operable at normal temperatures.

The controller 104 is configured to receive a plurality of inputs 330 and to provide a plurality of outputs 332. The inputs 330 and outputs 332 may each comprise digital and/or analog lines. At least some of the inputs 330 and outputs 332 are data lines through which data is provided to and/or extracted from quantum computing device 300. Other inputs 330 are control lines via which the operation of the quantum computing device 300 may be adjusted or otherwise controlled.

The controller 104 is operatively coupled to the qubit registers 312 via a quantum interface 334. The quantum interface 334 is further configured to exchange signals bidirectionally with the qubit registers 312 and the controller 104. Such signals may, for example, include electrical, magnetic, and/or optical signals. Via signals conveyed through the quantum interface 334, the controller 104 may interrogate and otherwise influence the quantum state held in any, some, or all of the qubit registers 312, as defined by the collective quantum state of the qubits therein. To that end, the quantum interface 334 includes qubit writer 336 and qubit reader 338. The qubit writer 336 is configured to output a signal to one or more qubits 314 of a qubit register 312 based on write-data received from the controller 104. The qubit reader 338 is configured to sense a signal from one or more qubits 314 of a qubit register 312 and to output read data to the controller 104 based on the signal. The read data received from the qubit reader 338 may include an estimate of an observable of the quantum state held in a qubit register 312.

In some examples, suitably configured signals from qubit writer 336 may interact physically with one or more qubits 314 of a qubit register 312 to trigger measurement of the quantum state held in the one or more qubits 314. The qubit reader 338 may sense a resulting signal released by the one or more qubits 314 pursuant to the measurement and may furnish read data corresponding to the resulting signal to classical computing device 318. The measurement of the quantum-mechanical state is defined by the operator O corresponding to the observable to be measured; the result R of the measurement is guaranteed to be one of the allowed eigenvalues of O. In the quantum computing device 300, R is statistically related to the qubit register state prior to the measurement but is not uniquely determined by the qubit register state.

Pursuant to appropriate input from the controller 104, the quantum interface 334 is configured to implement one or more quantum-logic gates to operate on the quantum state held in a qubit register 312. Whereas the function of each type of logic gate of a classical computer system is described according to a corresponding truth table, the function of each type of quantum gate is described by a corresponding operator matrix. The operator matrix operates on (i.e., multiplies) the complex vector representing a qubit register state and effects a specified rotation of that vector in Hilbert space.

Each qubit 314 of any qubit register 312 may be interrogated via quantum interface 334 so as to reveal with confidence the standard basis vector |0〉 or |1〉 that characterizes the quantum state of that qubit 314. However, errors sometimes occur in the measurements of the quantum states of physical qubits. Accordingly, any qubit 314 may be implemented as a logical qubit, which includes a grouping of physical qubits measured according to an error-correcting quantum algorithm or circuit that reveals the quantum state of the logical qubit with above a threshold confidence.

The methods and processes described herein are tied to a computing system of one or more computing devices. In particular, such methods and processes can be implemented as a computer-application program or service, an application-programming interface (API), a library, and/or other computer-program product.

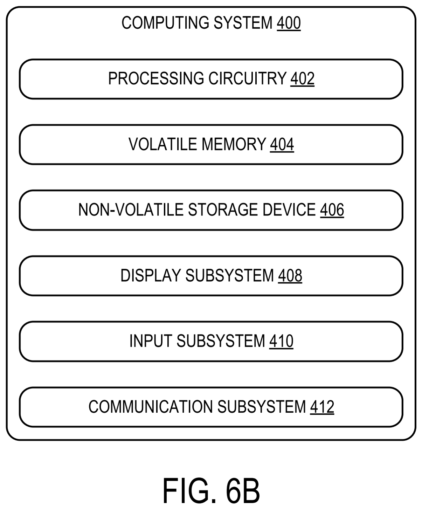

FIG. 6B schematically shows a non-limiting embodiment of a computing system 400 that can enact one or more of the methods and processes described above. Computing system 400 is shown in simplified form. Computing system 300 may embody the quantum computing system 100 described above and illustrated in FIG. 4.

Computing system 400 includes processing circuitry 402, volatile memory 404, and a non-volatile storage device 406. Computing system 400 may optionally include a display subsystem 408, input subsystem 410, communication subsystem 412, and/or other components not shown in FIG. 6B.

Processing circuitry 402 typically includes one or more logic processors, which are physical devices configured to execute instructions. For example, the logic processors may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the processing circuitry 402 may be single-core or multi-core, and the instructions executed thereon may be configured for sequential, parallel, and/or distributed processing. Individual components of the processing circuitry 402 optionally may be distributed among two or more separate devices, which may be remotely located and/or configured for coordinated processing. For example, aspects of the computing system 400 disclosed herein may be virtualized and executed by remotely accessible, networked computing devices configured in a cloud-computing configuration. In such a case, these virtualized aspects are run on different physical logic processors of various different machines. These different physical logic processors of the different machines will be understood to be collectively encompassed by processing circuitry 402.

Non-volatile storage device 406 includes one or more physical devices configured to hold instructions executable by the processing circuitry to implement the methods and processes described herein. When such methods and processes are implemented, the state of non-volatile storage device 406 may be transformed-e.g., to hold different data.

Non-volatile storage device 406 may include physical devices that are removable and/or built in. Non-volatile storage device 406 may include optical memory, semiconductor memory, and/or magnetic memory, or other mass storage device technology. Non-volatile storage device 406 may include nonvolatile, dynamic, static, read/write, read-only, sequential-access, location-addressable, file-addressable, and/or content-addressable devices. It will be appreciated that non-volatile storage device 406 is configured to hold instructions even when power is cut to the non-volatile storage device 406.

Volatile memory 404 may include physical devices that include random access memory. Volatile memory 404 is typically utilized by processing circuitry 402 to temporarily store information during processing of software instructions. It will be appreciated that volatile memory 404 typically does not continue to store instructions when power is cut to the volatile memory 404.

Aspects of processing circuitry 402, volatile memory 404, and non-volatile storage device 406 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 400 typically implemented in software by a processor to perform a particular function using portions of volatile memory, which function involves transformative processing that specially configures the processor to perform the function. Thus, a module, program, or engine may be instantiated via processing circuitry 402 executing instructions held by non-volatile storage device 406, using portions of volatile memory 404. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 408 may be used to present a visual representation of data held by non-volatile storage device 406. The visual representation may take the form of a graphical user interface (GUI). As the herein described methods and processes change the data held by the non-volatile storage device 404, and thus transform the state of the non-volatile storage device 404, the state of display subsystem 408 may likewise be transformed to visually represent changes in the underlying data. Display subsystem 408 may include one or more display devices utilizing virtually any type of technology. Such display devices may be combined with processing circuitry 402, volatile memory 404, and/or non-volatile storage device 406 in a shared enclosure, or such display devices may be peripheral display devices.

When included, input subsystem 410 may comprise or interface with one or more user-input devices such as a keyboard, mouse, touch screen, camera, or microphone.

When included, communication subsystem 412 may be configured to communicatively couple various computing devices described herein with each other, and with other devices. Communication subsystem 412 may include wired and/or wireless communication devices compatible with one or more different communication protocols. As non-limiting examples, the communication subsystem 412 may be configured for communication via a wired or wireless local- or wide-area network, broadband cellular network, etc. In some embodiments, the communication subsystem 412 may allow computing system 400 to send and/or receive messages to and/or from other devices via a network such as the Internet.

"And/or" as used herein is defined as the inclusive or V, as specified by the following truth table:

| A | B | AVB |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A qubit island comprising:
a plurality of topological superconducting wires;
a trivial superconducting wire that couples the topological superconducting wires; and
one or more electrostatic gates located above the topological superconducting wires and the trivial superconducting wire in a thickness direction, wherein:
the plurality of topological superconducting wires each have respective topological wire widths that are greater than a trivial wire width of the trivial superconducting wire; and
the one or more electrostatic gates are operated at a gate voltage that places the topological superconducting wires into a single sub-band regime and places the trivial superconducting wire into a depleted regime.

2. The qubit island of claim 1, wherein, in the single sub-band regime, respective Majorana zero modes, MZMs, are instantiated at respective endpoints of the topological superconducting wires.

3. The qubit island of claim 1 or claim 2, wherein the qubit island is:
a tetron island at which four MZMs are instantiated; or
a hexon island at which six MZMs are instantiated.

4. The qubit island of any preceding claim, further comprising:
a dielectric layer located below the one or more electrostatic gates in the thickness direction;
a barrier layer located below the dielectric layer in the thickness direction, wherein the topological superconducting wires and the trivial superconducting wire are positioned at an interface between the dielectric layer and the barrier layer; and
a two-dimensional electron gas layer located below the barrier layer in the thickness direction.

5. The qubit island of any preceding claim, wherein a depletion voltage difference between a topological wire depletion voltage of the topological superconducting wires and a trivial wire depletion voltage of the trivial superconducting wire is between 0.04 V and 0.4 V.

6. The qubit island of any preceding claim, wherein the topological superconducting wires each have respective topological wire widths between 30 nm and 90 nm.

7. The qubit island of any preceding claim, wherein the trivial superconducting wire has a trivial wire width between 30 nm and 80 nm.

8. The qubit island of any preceding claim, wherein the trivial superconducting wire is coupled to a ground.

9. The qubit island of any preceding claim, wherein the qubit island includes a plurality of electrostatic gates that are located above corresponding topological superconducting wires in the thickness direction.

10. The qubit island of any preceding claim, wherein the qubit island includes a single electrostatic gate that places the plurality of topological superconducting wires into the single sub-band regime.

11. A quantum computing system comprising:
a plurality of qubit islands as defined in any preceding claim, and
a controller configured to operate the one or more electrostatic gates in each of the qubit islands at a gate voltage that places the topological superconducting wires into a single sub-band regime and places the trivial superconducting wire into a depleted regime.

12. A method for use with a quantum computing system, the method comprising:
forming a plurality of Majorana zero modes, MZMs, at respective endpoints of a plurality of topological superconducting wires included in a plurality of qubit islands included in the quantum computing system, wherein:
forming the MZMs includes, for each of the qubit islands, setting one or more electrostatic gates included in the qubit island to a gate voltage that places a plurality of topological superconducting wires into a single sub-band regime and places a trivial superconducting wire into a depleted regime; and
in each of the qubit islands:
the trivial superconducting wire couples the topological superconducting wires included in that qubit island; and
the plurality of topological superconducting wires each have respective topological wire widths that are greater than a trivial wire width of the trivial superconducting wire.

13. The method of claim 12, wherein each of the qubit islands is:
a tetron island at which four MZMs are instantiated; or
a hexon island at which six MZMs are instantiated.

14. The method of claim 12 or claim 13, wherein each of the qubit islands includes:
a dielectric layer located below the one or more electrostatic gates in the thickness direction;
a barrier layer located below the dielectric layer in the thickness direction, wherein the topological superconducting wires and the trivial superconducting wire are positioned at an interface between the dielectric layer and the barrier layer; and
a two-dimensional electron gas layer located below the barrier layer in the thickness direction.
